# EUROPÄISCHE PATENTSCHRIFT

(11) **EP 4 295 672 B1**
(45) Veröffentlichungstag und Bekanntmachung des Hinweises auf die Patenterteilung: **18.11.2026**
(21) Anmeldenummer: 22180540.1
(22) Anmeldetag: 22.06.2022
(51) Int. Cl.: A01G 31/06

(54) **PFLANZENTRÄGER**
PLANT CARRIER
SUPPORT DE PLANTES

(43) Veröffentlichungstag der Anmeldung: 27.12.2023
(60) Teilanmeldung: 25215834.0 / 4 670 496
(73) Patentinhaber: Jungheinrich Aktiengesellschaft, 22047 Hamburg (DE)
(72) Erfinder: Rollwa, Volker, 66953 Pirmasens (DE)
(74) Vertreter: Keil & Schaafhausen Patentanwälte PartGmbB

(56) Entgegenhaltungen:
- CN-U- 216 722 443
- FR-A1- 2 382 850
- FR-A1- 2 761 575

## Beschreibung

Die vorliegende Erfindung betrifft einen Pflanzenträger mit einem Bewässerungsraum, einem Zulauf und einem Ablauf, der eine Ablaufpfadanordnung aufweist.

Ein derartiger Pflanzenträger wird insbesondere beim so genannten "Vertical Farming" verwendet, also bei einer Gewächshausanordnung, bei der mehrere derartige Pflanzenträger in Schwerkraftrichtung übereinander angeordnet sind. Eine besonders bevorzugte Anwendung ist hierbei die Anordnung der Pflanzenträger in einem Blocklager, bei dem die Pflanzenträger unmittelbar aufeinandergestapelt werden.

Im Pflanzenträger werden Samen, Keimlinge oder junge Pflanzen auf einem Substrat oder einer anderen Unterlage herangezogen. Die Pflanzen, genauer gesagt, die Wurzeln der Pflanzen, müssen dabei von Zeit zu Zeit bewässert werden. Hierbei ist es vielfach erwünscht, dass die Wurzeln der Pflanzen für einen gewissen Zeitraum benetzt werden, wobei man nach Ablauf dieses Zeitraums das Wasser wieder ablaufen lässt, so dass die Wurzeln mit Sauerstoff in Berührung kommen.

Diese intermittierende Bewässerung erfordert jedoch einen relativ hohen Steueraufwand, der unter anderem Ventile erfordert, die im Bereich des Ablaufes angeordnet sind, um das Wasser aus dem Bewässerungsraum ablaufen zu lassen oder es dort zu halten.

FR 2 382 850 A zeigt einen Pflanzenträger mit einem Bewässerungsraum, einem Zulauf und einem Ablauf, der eine Ablaufpfadanordnung aufweist.

FR 2 761 575 A1 beschreibt einen weiteren Pflanzenträger.

CN 216 722 443 U offenbart einen Tropfer mit einem Teslaventil.

Der Erfindung liegt die Aufgabe zugrunde, einen Pflanzenträger bereitzustellen, der für eine intermittierende Bewässerung geeignet und einfach aufgebaut ist.

Diese Aufgabe wird gemäß durch den Pflanzenträger mit den Merkmalen des Anspruchs 1 gelöst. Bevorzugte Ausführungsformen der Erfindung sind aus den abhängigen Ansprüchen ersichtlich.

Bei einem derartigen Pflanzenträger ist zur Steuerung des Wassers beim Abfließen kein Ventil mehr erforderlich. Das abfließende Wasser fließt einerseits durch den ersten Ablaufpfad und andererseits durch den zweiten Ablaufpfad. Das durch den zweiten Ablaufpfad fließende Wasser trifft dann mit dem durch den ersten Ablaufpfad strömenden Wasser zusammen und, da das Wasser aus dem zweiten Strömungspfad eine Richtungskomponente aufweist, die entgegengesetzt zu der Richtung ist, mit der das Wasser durch den ersten Ablaufpfad strömt, bremst das durch den zweiten Ablaufpfad fließende Wasser das Wasser im ersten Ablaufpfad und führt dadurch zu einer Drosselung des Stroms des Wassers, das insgesamt aus dem Bewässerungsraum abfließt. Diese Drosselung wird allerdings nicht durch kleine Querschnitte erreicht, bei denen die Gefahr einer Verstopfung durch Pflanzenreste, Verschmutzungsteilchen oder dergleichen besteht, sondern wird durch entgegengesetzt gerichtete Strömungen bewirkt. Die Abmessungen der Ablaufpfade können dabei so groß gewählt werden, dass das Risiko einer Verstopfung durch Pflanzenreste oder dergleichen kleingehalten werden kann. Die Anordnung der beiden Ablaufpfade entspricht dabei dem Aufbau eines Tesla-Ventils, wie es beispielsweise aus US 1 329 559 A bekannt ist. Dieses Tesla-Ventil wird dabei in "Sperrrichtung" betrieben.Allerdings wird der Strom durch die Ablaufpfade nicht vollständig unterbunden, sondern nur verlangsamt. Wenn hier und im Folgenden von "Wasser" die Rede ist, dann ist damit nicht nur reines Wasser, sondern auch jede Flüssigkeit gemeint, mit der Nährstoffe und Feuchtigkeit zu den im Pflanzenträger aufgenommenen Pflanzen transportiert werden kann.

Vorzugsweise weist der zweite Ablaufpfad mindestens fünf Mündungen in dem ersten Ablaufpfad auf. Damit ergeben sich fünf Störstellen, in denen der Strom des abfließenden Wassers durch den ersten Ablaufpfad gestört und gebremst wird. Je mehr Mündungen vorhanden sind, desto größer ist die Drosselwirkung.

Bevorzugterweise weist der erste Ablaufpfad mindestens einen ersten Abschnitt und einen zweiten Abschnitt auf, die in Reihe geschaltet sind, wobei der erste Abschnitt und der zweite Abschnitt nebeneinander angeordnet sind. Zwischen dem ersten Abschnitt und dem zweiten Abschnitt muss das abfließende Wasser also eine Kehre um etwa 180° durchführen, was zu einer weiteren Drosselung und Abbremsung des Stroms des Wassers führt, das durch die Ablaufpfadanordnung fließt. Zum zweiten Abschnitt des ersten Ablaufpfads kann natürlich auch ein zweiter Abschnitt des zweiten Ablaufpfads parallelgeschaltet sein, so dass sich auch im zweiten Abschnitt Mündungen des zweiten Ablaufpfades in den ersten Ablaufpfad ergeben. Dies verbessert die Drosselwirkung noch weiter.

Vorzugsweise weist der erste Ablaufpfad eine ungerade Anzahl von Abschnitten auf, die in Reihe geschaltet und nebeneinander angeordnet sind. Es ergibt sich dabei eine mäanderförmige Führung des ersten Ablaufpfades mit einer entsprechend großen Anzahl von Umlenkungen des Wassers, das durch die Ablaufpfadanordnung fließt. Der "Eingang" des ersten Ablaufpfades befindet sich dann nicht am gleichen Ende wie der "Ausgang". In allen Abschnitten können Mündungen des zweiten Ablaufpfades vorhanden sein, wobei bei allen Mündungen eine Strömung im ersten Ablaufpfad auf eine entgegengesetzt gerichtete Strömung im zweiten Ablaufpfad trifft.

Gemäß der Erfindung weist der erste Ablauf eine Ablauföffnung auf, die mit der Ablaufpfadanordnung über eine Prallkopfeinrichtung in Verbindung steht, wobei die Prallkopfeinrichtung einen in Schwerkraftrichtung nach oben gerichteten Prallkopf aufweist, dessen Oberfläche in eine Wand eines ersten Kanals übergeht, und die Ablaufpfadanordnung über mindestens eine Öffnung der Prallkopfanordnung mit einem zweiten Kanal in Verbindung steht und der erste Kanal und der zweite Kanal in die Ablauföffnung münden oder durch sie hindurch verlaufen. Wenn mehrere Pflanzenträger übereinander angeordnet sind, dann muss das Wasser, das aus einem in Schwerkraftrichtung höher angeordneten Pflanzenträger abfließt, durch einen oder mehrere weiter unten angeordnete Pflanzenträger strömen und, wenn man vermeiden will, dass das abfließende Wasser, das in gewisser Hinsicht verbraucht ist, den Bewässerungsraum des oder der weiter unten angeordneten Pflanzenträger durchfließt, dafür sorgen, dass das aus dem oberen Pflanzenträger abfließende Wasser durch den Ablauf eines weiter unten angeordneten Pflanzenträgers abfließen kann. Um hierbei eine zu große Fallhöhe des abfließenden Wassers zu vermeiden, ist der Prallkopf vorgesehen, auf den das aus einem oberen Pflanzenträger ablaufende Wasser austritt. Von dem Prallkopf wird das Wasser dann durch einen ersten Kanal in die Ablauföffnung geleitet. Das aus dem Pflanzenträger, der mit dieser Prallkopfeinrichtung ausgerüstet ist, abfließende Wasser fließt dann in den zweiten Kanal. Eine Durchmischung des Wassers aus dem oberen und aus dem unteren Pflanzenträger findet dann erst in der Prallkopfeinrichtung oder sogar danach statt. Damit kann man vermeiden, dass aus dem oberen Pflanzenträger abfließendes Wasser in den Bewässerungsraum des unteren Pflanzenträgers eindringt.

Vorzugsweise ist die Prallkopfeinrichtung entlang der Schwerkraftrichtung mit der Ablauföffnung ausgerichtet. Dies hat vor allem dann Vorteile, wenn die Pflanzenträger stapelbar ausgebildet sind. In diesem Fall befindet sich die Prallkopfeinrichtung in Schwerkraftrichtung unterhalb der Ablauföffnung eines darüber angeordneten Pflanzenträgers. Man kann dabei auch mehr als zwei Pflanzenträger in Schwerkraftrichtung übereinander anordnen, ohne dass sich eine zu große Fallhöhe ergibt.

Hierbei ist bevorzugt, dass die Prallkopfeinrichtung mit einem in Schwerkraftrichtung nach oben gerichteten Rohr in Verbindung steht. Durch dieses Rohr kann dann das Wasser aus dem in Schwerkraftrichtung weiter oben angeordneten Pflanzenträger nach unten fließen und wird zuverlässig auf den Prallkopf der Prallkopfanordnung geleitet.

Vorzugsweise ist ein dritter Ablaufpfad vorgesehen, der mit dem Bewässerungsraum über einen Überlauf in Verbindung steht. Mit dieser Ausgestaltung wird auch die Steuerung des Zulaufs des Wassers ganz erheblich vereinfacht. Man kann Wasser mit einem Volumen zuführen, das über das zum Füllen des Bewässerungsraums notwendigen Volumen deutlich hinausgeht. Das Wasser staut sich dann so lange im Bewässerungsraum an, bis es über den Überlauf abfließen kann. Der Überlauf definiert also die Füllstandshöhe des Wassers im Bewässerungsraum. Da der Überlauf dem abfließenden Wasser praktisch keinen Strömungswiderstand entgegensetzt und der dritte Ablaufpfad parallel zum zweiten Ablaufpfad angeordnet ist, wird das Wasser nicht oder nur in einem akzeptablen Maß gedrosselt, so dass es ablaufen kann und eine Füllstandshöhe im Bewässerungsraum eingehalten wird, die der Höhe des Überlaufs entspricht. Wenn dann die Bewässerungsräume aller Pflanzenträger in ausreichendem Maße gefüllt sind, kann der Zustrom des Wassers unterbrochen werden und das Wasser kann dann durch den ersten und zweiten Ablaufpfad abfließen, wobei der Strom des abfließenden Wassers, wie oben ausgeführt, stark gedrosselt wird, so dass für eine vorbestimmte Zeit noch ausreichend Wasser im Bewässerungsraum vorhanden ist, um die Pflanzen zu bewässern.

Hierbei ist bevorzugt, dass der erste Ablaufpfad und der zweite Ablaufpfad vom dritten Ablaufpfad durch eine Wand getrennt, die höher ist als eine durch den Überlauf bestimmte Höhe. Das über den Überlauf in den dritten Ablaufpfad und von dort zum Ablauf fließende Wasser wird also nicht mit dem Wasser vermischt, das durch den ersten und den zweiten Ablaufpfad fließt.

Vorzugsweise weist der Zulauf ein Zulaufrohr mit einem Strömungsquerschnitt auf, der durch eine Prallplatte unterbrochen ist, wobei das Zulaufrohr eine Rohrwand mit mindestens einer Austrittsöffnung im Bereich der Prallplatte aufweist. Auch für den Zulauf vermeidet man eine zu große Fallhöhe. Bei übereinander angeordneten Pflanzenträgern kann das zugeführte Wasser nur von einem Zulaufrohr zum nächsten strömen, nicht jedoch über die gesamte Höhe mehrerer aufeinander gestapelter Pflanzenträger. Das Wasser, das durch einen in Schwerkraftrichtung oben angeordneten Pflanzenträger strömt, kann allenfalls bis zur Prallplatte in dem Zulaufrohr des nächsten in Schwerkraftrichtung darunter angeordneten Pflanzenträger fließen. Dort wird es umgelenkt und muss nach außen durch die Austrittsöffnung ausströmen.

Hierbei ist bevorzugt, dass das Zulaufrohr mindestens eine Eintrittsöffnung in seiner Wand aufweist, die in einer vorbestimmten Höhe über einem Boden eines Zulaufraums angeordnet ist. Das aus der Austrittsöffnung des Zulaufrohrs austretende Wasser kann dann durch die Eintrittsöffnung wieder in das Zulaufrohr eintreten und durch das Zulaufrohr dann weiter nach unten strömen, um einen in Schwerkraftrichtung weiter unten angeordneten Pflanzenträger mit Wasser zu versorgen. Die Höhe der Eintrittsöffnung, also der Abstand der Eintrittsöffnung vom Boden des Zulaufraums, bestimmt dann die Füllhöhe im Zulaufraum.

Bevorzugterweise ist der Zulaufraum vom Bewässerungsraum durch eine Trennwand getrennt, die mindestens eine Durchströmöffnung aufweist. Die Trennwand verhindert, dass Pflanzenreste, abgerissene Wurzeln, Verschmutzungen oder dergleichen von dem Bewässerungsraum in den Zulaufraum gelangen und dann zu einem anderen Pflanzenträger mitgeschwemmt werden. Ein derartiger Durchtritt durch die Durchströmöffnung ist zwar nicht vollständig auszuschließen, aber sehr unwahrscheinlich, weil in der Durchströmöffnung eine Strömung vom Zulaufraum zum Bewässerungsraum entsteht.

Bevorzugterweise grenzt die Durchströmöffnung an den Boden des Bewässerungsraums an. Die Durchströmöffnung ist also quasi "unten" angeordnet, was die Gefahr des Eindringens von Verschmutzungen, Pflanzenresten oder dergleichen, geringhält.

Bevorzugterweise sind der Zulauf und der Ablauf am gleichen Rand des Bewässerungsraums angeordnet. Dies vereinfacht den Aufbau vor allem dann, wenn der Pflanzenträger in einer Blocklageranordnung angeordnet werden soll.

Die Erfindung wird im Folgenden anhand eines bevorzugten Ausführungsbeispiels in Verbindung mit der Zeichnung beschrieben. Hierin zeigen:
- Fig. 1: einen Pflanzenträger,
- Fig. 2: ein Ende des Pflanzenträgers mit Zulauf und Ablauf in vergrößerter Darstellung,
- Fig. 3: eine perspektivische Darstellung einer Ablaufpfadanordnung,
- Fig. 4: eine Draufsicht auf die Ablaufpfadanordnung,
- Fig. 5: eine perspektivische Darstellung einer Prallkopfeinrichtung, teilweise im Schnitt,
- Fig. 6: die Prallkopfeinrichtung in perspektivischer Darstellung,
- Fig. 7: eine perspektivische Darstellung eines Zulaufrohrs,
- Fig. 8: das Zulaufrohr nach Fig. 7, teilweise im Schnitt,
- Fig. 9: eine perspektivische Darstellung, teilweise im Schnitt, des Zulaufs und
- Fig. 10: eine perspektivische Darstellung, teilweise im Schnitt, des Ablaufs.

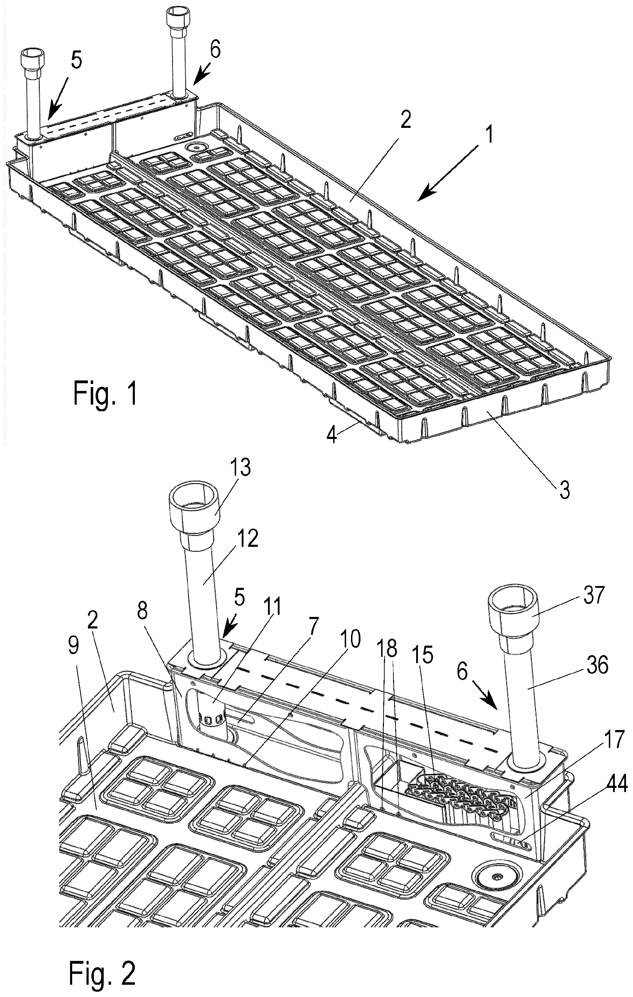

Fig. 1 zeigt einen Pflanzenträger 1, der auch als "Bench" bezeichnet werden kann. Der Pflanzenträger 1 weist einen Bewässerungsraum 2 auf, der von einer Wand 3 umgeben ist. Der Bewässerungsraum 2 dient dazu, Pflanzen, die auf einem Substrat, auf einem Vlies oder dergleichen angeordnet sind, aufzunehmen. Die Pflanzen können dort von einem frühen Stadium, wie Samen oder Keimlinge, zu einer ausgewachsenen Pflanze heranwachsen, um dann geerntet zu werden.

Der Pflanzenträger 1 ist insbesondere dazu vorgesehen, in einem Blocklager oder einer Stapellageranordnung verwendet zu werden. Hierbei werden mehrere Pflanzenträger 1 in Schwerkraftrichtung übereinander angeordnet. Die Pflanzenträger 1 weisen dann nicht näher dargestellte Abstandshalter auf, die mit zueinander passenden Geometrien versehen sind, so dass man in dem Blocklager einen Stapel von mehreren Pflanzenträgern 1 anordnen kann. Die Pflanzenträger 1 weisen dann an ihrer in Schwerkraftrichtung unteren Seite eine Laufschiene 4 und gegebenenfalls eine nicht dargestellte Beleuchtungseinrichtung auf, mit der Pflanzen in einem Pflanzenträger beleuchtet werden können, der in Schwerkraftrichtung eine Position unter dem jeweiligen Pflanzenträger angeordnet ist.

Pflanzen benötigen zu ihrem Wachstum Flüssigkeit, die im Folgenden allgemein als "Wasser" bezeichnet wird. Mit dem Wasser werden üblicherweise auch Nährstoffe zu den Pflanzen transportiert.

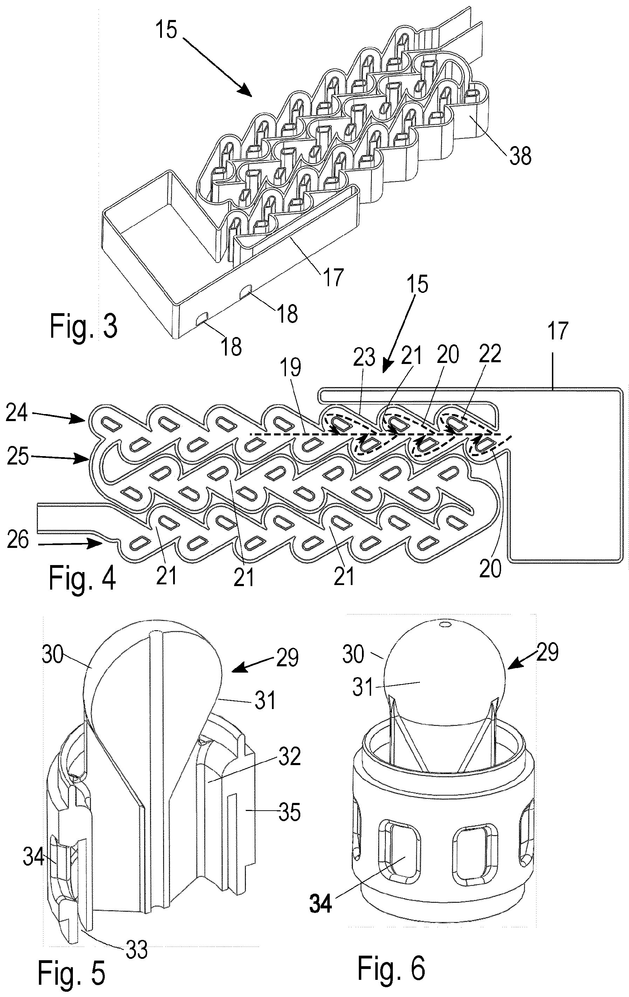

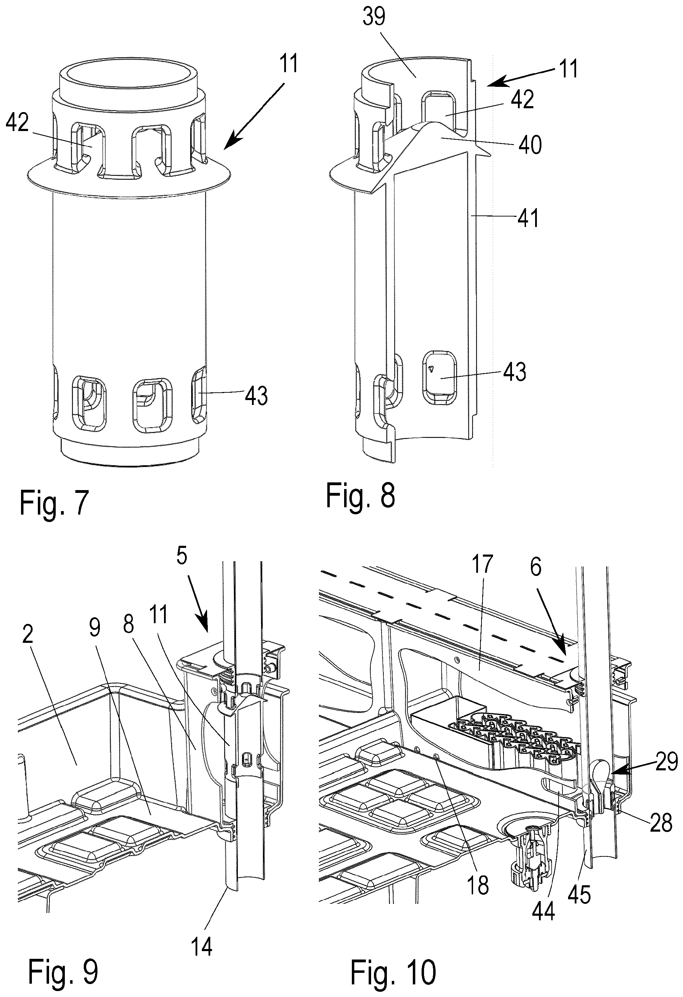

Um die Versorgung mit Wasser sicherzustellen, weist der Pflanzenträger 1 einen Zulauf 5 und einen Ablauf 6 auf. Zulauf 5 und Ablauf 6 sind in Fig. 2 vergrößert dargestellt. Der Ablauf 6 wird im Zusammenhang mit den Fig. 3 bis 6 näher erläutert. Der Zulauf 5 wird im Zusammenhang mit den Fig. 7 bis 10 näher erläutert.

Der Zulauf 5 weist einen Zulaufraum 7 auf, der vom Bewässerungsraum 2 durch eine Wand 8 getrennt ist. Der Bewässerungsraum 2 weist einen Boden 9 auf. Die Wand 8 weist im Bereich des Bodens 9 mehrere Öffnungen 10 auf, durch die Wasser vom Zulaufraum 7 in den Bewässerungsraum 2 einströmen kann. Die Wand 8 ist hier teilweise geöffnet dargestellt, um ein Zulaufrohr 11 zu zeigen, das später erläutert werden wird. Das Zulaufrohr 11 steht mit einem in Schwerkraftrichtung nach oben ragenden Rohr 12 in Verbindung. Dieses Rohr 12 ist vorgesehen, um Wasser aus einem in Schwerkraftrichtung oberhalb des Pflanzenträgers 1 angeordneten Pflanzenträger in den Pflanzenträger 1 fließen zu lassen. Das Rohr 12 kann an seinem in Schwerkraftrichtung oberen Ende eine Muffe 13 aufweisen, in die ein unteres Ende 14 des Zulaufrohrs 11 (Fig. 9) eines in Schwerkraftrichtung oberhalb des Pflanzenträgers 1 angeordneten weiteren Pflanzenträgers eintreten kann.

Der Ablauf 6 weist eine Ablaufpfadanordnung 15 auf, die in Verbindung mit den Fig. 3 und 4 näher dargestellt wird. Die Ablaufpfadanordnung 15 ist in einem Ablaufraum 16 angeordnet, der vom Bewässerungsraum 2 durch eine Wand 17 getrennt ist. Die Wand 17 weist im Bereich des Bodens 9 des Bewässerungsraums 2 mehrere Öffnungen 18 auf. Weiterhin weist die Wand 17 einen Überlauf 44 auf, der beispielsweise auch als Öffnung ausgebildet sein kann.

Die Ablaufpfadanordnung 15 weist einen ersten Ablaufpfad 19 auf, dessen Anfang in Fig. 4 gestrichelt dargestellt ist. In dem ersten Ablaufpfad 19 kann das Wasser mit einer Strömungsrichtung strömen, die in dem in Fig. 4 gestrichelt dargestellten Bereich von rechts nach links gerichtet ist. Die Ablaufpfadanordnung 15 weist weiterhin einen zweiten Ablaufpfad 20 auf, in dem das abfließende Wasser in einem Bogen geführt wird und der mit einer Mündung 21 in den ersten Ablaufpfad 19 mündet. Im Bereich der Mündung 21 weist das durch den zweiten Ablaufpfad 20 strömende Wasser eine Strömungsrichtung mit einer Komponente auf, die der Strömungsrichtung im ersten Ablaufpfad 19 entgegengesetzt gerichtet ist.

Der erste Ablaufpfad 19 und der zweite Ablaufpfad 20 sind durch Schikanen 22 voneinander getrennt. Der zweite Ablaufpfad 20 weist eine vom ersten Ablaufpfad 19 abgewandte Leitwand 23 auf, die einen geraden Abschnitt und einen gekrümmten Abschnitt aufweist, der einen Krümmungswinkel im Bereich von 150 bis 180° aufweist.

Der erste Ablaufpfad 19 weist einen ersten Abschnitt 24, einen zweiten Abschnitt 25 und einen dritten Abschnitt 26 auf. Die drei Abschnitte 24-26 sind in Strömungsrichtung in Reihe geschaltet, also hintereinander angeordnet. Die drei Abschnitte 24-26 sind allerdings nebeneinander angeordnet, so dass das durch den ersten Ablaufpad 19 strömende Wasser zweimal eine Richtungsänderung um etwa 180° vollführen muss, um die Ablaufpfadanordnung 15 vollständig durchströmen zu können. Im zweiten Abschnitt 25 und im dritten Abschnitt 26 sind ebenfalls Mündungen 21 vorgesehen, so dass auch im zweiten Abschnitt 25 und im dritten Abschnitt 26 eine Drosselung der Strömung des abfließenden Wassers erreicht werden kann, wobei diese Drosselung, also eine Verlangsamung der Strömungsgeschwindigkeit, nicht durch eine Querschnittsverengung verursacht wird. Die Querschnitte können im Gegenteil relativ groß gewählt werden. Dies gilt auch für die Größe der Öffnungen 18 in der Wand 17. Damit wird dem Risiko vorgebeugt, dass der Ablauf durch Pflanzenreste, wie abgebrochene Wurzeln oder dergleichen, oder durch Schmutzteilchen verstopft wird.

Der zweite Ablaufpfad 22 ist auch im zweiten Abschnitt 24 und im dritten Abschnitt 25 parallel zum ersten Ablaufpfad 19 angeordnet und kann dementsprechend über die gesamte Strömungslänge der Ablaufpfadanordnung 15 bremsend einwirken. Man kann also ein sehr langsames Abfließen des Wassers aus dem Bewässerungsraum 2 sicherstellen, ohne dass man hierfür Ventile benötigt. Die Zeit, die das Wasser benötigt, um vollständig aus dem Bewässerungsraum 2 abzufließen, kann man durch eine entsprechende Dimensionierung der Ablaufpfadanordnung 15 relativ genau einstellen.

Wie man insbesondere in Fig. 10 erkennen kann, weist der Ablauf 6 eine Ablauföffnung 28 auf, die im Boden 9 des Bewässerungsraums 2 ausgebildet ist. In der Ablauföffnung 28 ist eine Prallkopfeinrichtung 29 angeordnet, die mit der Ablaufpfadanordnung 15 in Verbindung steht. Die Prallkopfanordnung 29 weist einen Prallkopf 30 auf, dessen Oberfläche 31 mit einem ersten Kanal 32 in Verbindung steht, der die Ablauföffnung 28 durchsetzt. Wasser, das aus einem in Schwerkraftrichtung weiter oben angeordneten Pflanzenträger abfließt, prallt dann auf den Prallkopf 30 und fließt durch den ersten Kanal 32 weiter nach unten, beispielsweise zu einem weiter unten angeordneten Pflanzenträger.

Die Prallkopfeinrichtung weist einen zweiten Kanal 33 auf, der über eine Öffnung 34 in einer Wand 35 der Prallkopfeinrichtung 29 mit der Ablaufpfadanordnung 15 in Verbindung steht. Wasser, das die Ablaufpfadanordnung 15 durchströmt hat, tritt durch die Öffnung 34 in den zweiten Kanal 33 ein und kann dann ebenfalls nach unten zu einem in Schwerkraftrichtung weiter unten angeordneten Pflanzenträger abfließen. Das Wasser aus dem aktuellen Pflanzenträger 1 vermischt sich also nicht im Pflanzenträger 1 mit Wasser aus einem darüber liegenden Pflanzenträger.

Die Prallkopfeinrichtung 29 steht mit einem in Schwerkraftrichtung nach oben gerichteten Rohr 36 in Verbindung, das an seinem in Schwerkraftrichtung oberen Ende ebenfalls eine Muffe 37 aufweist, in die ein mit der Prallkopfeinrichtung 29 verbundenes Rohr 45 eintreten kann, um das aus dem Pflanzenträger 1 abfließende Wasser zum nächst unteren Pflanzenträger abzuleiten.

Auch Wasser, das durch den Überlauf 44 in der Wand 17 fließt, kann unmittelbar durch die Öffnungen 34 in der Prallkopfeinrichtung 29 abfließen. Hierzu ist ein dritter Ablaufpfad vorgesehen, der vom ersten Ablaufpfad 19 und vom zweiten Ablaufpfad 20 getrennt ist und zwar durch eine Wand 38, die höher ist als eine durch den Überlauf 44 bestimmte Höhe. Die Wand 38 weist also eine Höhe auf, die größer ist als ein Abstand zwischen der unteren Kante des Überlaufs 44 und dem Boden 9 des Bewässerungsraums 2.

Wie oben erwähnt, ist im Zulauf 5 das Zulaufrohr 11 angeordnet. Das Zulaufrohr weist einen Strömungsquerschnitt 39 auf, der durch eine Prallplatte 40 unterbrochen ist. Um ein Abfließen von Wasser, das aus einem in Schwerkraftrichtung oberen Pflanzenträger zufließt, nach unten in den Zulaufraum 7 zu ermöglichen, weist eine Wand 41 des Zulaufrohrs 11 mehrere Austrittsöffnungen 42 auf, durch die das Wasser in den Zulaufraum 7 einströmen kann. Der Pegel des Wassers im Zulaufraum 7 steigt dann so lange an, bis das Wasser durch Eintrittsöffnungen 43 wieder in das Zulaufrohr 11 eintreten kann. Die Höhe des Wasserstands wird durch den Abstand der jeweils unteren Kante der Eintrittsöffnung 43 vom Boden des Zulaufraums 2 bestimmt. Der Boden des Zulaufraums 7 entspricht normalerweise dem Boden 9 des Bewässerungsraums 2.

Der Strömungswiderstand, dem sich das Wasser durch die Austrittsöffnungen 42 des Zulaufrohrs 11 und durch die Öffnungen 10 in der Wand 8 zwischen dem Zulaufraum 7 und dem Bewässerungsraum 2 ausgesetzt sieht, ist deutlich kleiner als der Strömungswiderstand, den die Ablaufpfadanordnung 15 erzeugt.

Mit dieser Anordnung wird die Steuerung der Bewässerung von Pflanzen, die im Pflanzenträger 1 angeordnet sind, ohne Verwendung von Ventilen am Pflanzenträger 1 auf einfache Weise möglich.

Um die Bewässerung einzuleiten, wird Wasser durch den Zulauf 5 eingespeist. Das Wasser strömt durch das Rohr 12 und gelangt zum Zulaufrohr 11 und von dort in den Zulaufraum 7. Das Wasser fließt dann durch die Öffnungen 10 in den Bewässerungsraum 2 und, wenn es die Eintrittsöffnungen 43 erreicht, auch in einen Pflanzenträger, der weiter unten angeordnet ist. In Abhängigkeit von der Anzahl der zu befüllenden Pflanzenträger 1 kann also ein relativ großer Volumenstrom in das Rohr 12 des obersten Pflanzenträgers 1 eingespeist werden. Eine Überbefüllung des Bewässerungsraums 2 kann nicht erfolgen, weil die Füllstandshöhe im Bewässerungsraum 2 niemals größer sein kann als der Pegel des Wassers im Zulaufraum 7, der wiederum durch die Eintrittsöffnungen 43 bestimmt wird.

Das durch die Öffnungen 10 in den Bewässerungsraum 2 eingetretene Wasser fließt dann bis zur Wand 17 und von dort durch die Öffnungen 18 in der Wand 17 in den Ablaufraum 16. Das abfließende Wasser wird allerdings durch die Ablaufpfadanordnung 15 gebremst, so dass es sich im Bewässerungsraum 2 aufstaut und zwar so lange, bis es den Überlauf 44 erreicht. Höher kann das Wasser im Bewässerungsraum 2 nicht ansteigen. Wasser, das über den Überlauf 44 in den Ablaufraum 16 eintritt, kann unmittelbar durch die Prallkopfeinrichtung 9 abfließen.

Wenn alle Pflanzenträger 1 in einem Stapel ausreichend mit Wasser versorgt worden sind, wird die Wasserversorgung einfach unterbrochen. Das Wasser im Bewässerungsraum 2 kann dann abfließen, allerdings sehr langsam, weil durch die Ablaufpfadanordnung 15 eine erhebliche Drosselwirkung auf das Wasser ausgeübt wird. Wie oben ausgeführt, kann man die Zeit, die das Wasservolumen im Bewässerungsraum 2 benötigt, um durch die Ablaufpfadanordnung 15 auszutreten, relativ genau einstellen. Man kann also damit bestimmen, wie lange die Pflanzen oder die Wurzeln der Pflanzen im Bewässerungsraum 2 von dem Wasser profitieren können.

Wie man in den Fig. 1 und 2 erkennen kann, sind der Zulauf 5 und der Ablauf 6 am gleichen Rand des Bewässerungsraums 2 angeordnet. Dementsprechend kann man alle für die Wasserversorgung des Bewässerungsraums 2 benötigten Elemente im Bereich eines Randes unterbringen.

Wie man in den Fig. 3 und 4 erkennen kann, ist der zweite Ablaufpfad 20 über eine große Anzahl von Mündungen 21 mit dem ersten Ablaufpfad 19 verbunden. Zweckmäßigerweise verwendet man mindestens fünf Mündungen 21.

Dargestellt sind drei Abschnitte 24-26 des ersten Ablaufpfades 19. Es ist zweckmäßig, eine ungerade Anzahl von Abschnitten zu verwenden, so dass das Wasser an einem Ende der Ablaufpfadanordnung 15 eintreten und am gegenüberliegenden Ende der Ablaufpfadanordnung 15 austreten kann.

## Patentansprüche

1. Pflanzenträger (1) mit einem Bewässerungsraum (2), einem Zulauf (5) und einem Ablauf (6), der eine Ablaufpfadanordnung (15) aufweist, wobei die Ablaufpfadanordnung (15) einen ersten Ablaufpfad (19) mit einer ersten Strömungsrichtung und einen zweiten Ablaufpfad (20) aufweist, wobei der zweite Ablaufpfad (20) mindestens eine Mündung (21) in den ersten Abflusspfad (19) aufweist,
**dadurch gekennzeichnet, dass** der zweite Ablaufpfad (20) im Bereich der Mündung (21) eine zweite Strömungsrichtung mit einer Richtungskomponente aufweist, die der ersten Strömungsrichtung im Bereich der Mündung (21) entgegengerichtet ist, und dass der Ablauf eine Ablauföffnung (28) aufweist, die mit der Ablaufpfadanordnung (15) über eine Prallkopfeinrichtung (29) in Verbindung steht, wobei die Prallkopfeinrichtung (29) einen in Schwerkraftrichtung nach oben gerichteten Prallkopf (30) aufweist, dessen Oberfläche (31) in eine Wand eines ersten Kanals (32) übergeht, und die Ablaufpfadanordnung (15) über mindestens eine Öffnung (34) der Prallkopfanordnung (29) mit einem zweiten Kanal (33) in Verbindung steht und der erste Kanal (32) und der zweite Kanal (33) in die Ablauföffnung (28) münden oder durch sie hindurch verlaufen.

2. Pflanzenträger nach Anspruch 1, **dadurch gekennzeichnet, dass** der zweite Ablaufpfad (20) mindestens fünf Mündungen (21) in den ersten Abflusspfad (19) aufweist.

3. Pflanzenträger nach einem der Ansprüche 1 oder 2, **dadurch gekennzeichnet, dass** der erste Ablaufpfad (19) mindestens einen ersten Abschnitt (24) und einen zweiten Abschnitt (25) aufweist, die in Reihe geschaltet sind, wobei der erste Abschnitt (24) und der zweite Abschnitt (25) nebeneinander angeordnet sind.

4. Pflanzenträger nach Anspruch 3, **dadurch gekennzeichnet, dass** der erste Ablaufpfad (19) eine ungerade Anzahl von Abschnitten (24-26) aufweist, die in Reihe geschaltet und nebeneinander angeordnet sind.

5. Pflanzenträger nach einem der Ansprüche 1 bis 4, **dadurch gekennzeichnet, dass** die Prallkopfeinrichtung (29) entlang der Schwerkraftrichtung mit der Ablauföffnung (28) ausgerichtet ist.

6. Pflanzenträger nach einem der Ansprüche 1 bis 5, **dadurch gekennzeichnet, dass** die Prallkopfeinrichtung (29) mit einem in Schwerkraftrichtung nach oben gerichteten Rohr (36) in Verbindung steht.

7. Pflanzenträger nach Anspruch 1, **dadurch gekennzeichnet, dass** ein dritter Ablaufpfad vorgesehen ist, der mit dem Bewässerungsraum (2) über einen Überlauf (44) in Verbindung steht.

8. Pflanzenträger nach Anspruch 7, **dadurch gekennzeichnet, dass** der erste Ablaufpfad (19) und der zweite Ablaufpfad (20) vom dritten Ablaufpfad durch eine Wand (38) getrennt ist, die höher ist als eine durch den Überlauf (44) bestimmte Höhe.

9. Pflanzenträger nach einem der Ansprüche 1 bis 8, **dadurch gekennzeichnet, dass** der Zulauf ein Zulaufrohr (11) mit einem Strömungsquerschnitt (39) aufweist, der durch eine Prallplatte (40) unterbrochen ist, wobei das Zulaufrohr (11) eine Rohrwand (41) mit mindestens einer Austrittsöffnung (42) im Bereich der Prallplatte (40) aufweist.

10. Pflanzenträger nach Anspruch 9, **dadurch gekennzeichnet, dass** das Zulaufrohr (11) mindestens eine Eintrittsöffnung (43) in seiner Wand (41) aufweist, die in einer vorbestimmte Höhe über einem Boden eines Zulaufraums (7) angeordnet ist.

11. Pflanzenträger nach Anspruch 10, **dadurch gekennzeichnet, dass** der Zulaufraum (7) vom Bewässerungsraum (2) durch eine Trennwand (8) getrennt ist, die mindestens eine Durchströmöffnung (10) aufweist.

12. Pflanzenträger nach Anspruch 11, **dadurch gekennzeichnet, dass** die Durchströmöffnung (10) an den Boden (9) des Bewässerungsraums (2) angrenzt.

13. Pflanzenträger nach einem der Ansprüche 1 bis 12, **dadurch gekennzeichnet, dass** der Zulauf (5) und der Ablauf (6) am gleichen Rand des Bewässerungsraums (2) angeordnet sind.

## Claims

1. Plant carrier (1) comprising an irrigation chamber (2), an inlet (5), and an outlet (6), which comprises a drainage path arrangement (15), wherein the drainage path arrangement (15) comprises a first drainage path (19) with a first flow direction and a second drainage path (20), wherein the second drainage path (20) has at least one opening (21) into the first drainage path (19), **characterized in that** the second discharge path (20) has, in the region of the junction (21), a second flow direction with a directional component that is opposite to the first flow direction in the region of the junction (21), and **in that** the discharge has a discharge opening (28) that is connected to the discharge path arrangement (15) via a baffle head assembly (29), wherein the baffle head assembly (29) comprises a baffle head (30) directed upward in the direction of gravity, the surface (31) of which merges into a wall of a first channel (32), and the drainage path assembly (15) communicates with a second channel (33) via at least one opening (34) in the baffle head assembly (29), and the first channel (32) and the second channel (33) open into the drainage opening (28) or pass through it.

2. Plant carrier according to claim 1, **characterized in that** the second drainage path (20) has at least five openings (21) into the first drainage path (19).

3. Plant carrier according to any one of claims 1 or 2, **characterized in that** the first drainage path (19) comprises at least a first section (24) and a second section (25) connected in series, wherein the first section (24) and the second section (25) are arranged side by side.

4. Plant carrier according to claim 3, **characterized in that** the first drainage path (19) comprises an odd number of sections (24-26) that are connected in series and arranged side by side.

5. Plant carrier according to any one of claims 1 through 4, **characterized in that** the impact head assembly (29) is aligned with the discharge opening (28) along the direction of gravity.

6. Plant carrier according to any one of claims 1 through 5, **characterized in that** the baffle head device (29) is connected to a tube (36) directed upward in the direction of gravity.

7. Plant carrier according to claim 1, **characterized in that** a third drainage path is provided, which communicates with the irrigation chamber (2) via an overflow (44).

8. Plant carrier according to claim 7, **characterized in that** the first drainage path (19) and the second drainage path (20) are separated from the third drainage path by a wall (38) that is higher than a height determined by the overflow (44).

9. Plant carrier according to any one of claims 1 through 8, **characterized in that** the inlet comprises an inlet pipe (11) with a flow cross-section (39) that is interrupted by a baffle plate (40), wherein the inlet pipe (11) has a pipe wall (41) with at least one outlet opening (42) in the area of the baffle plate (40).

10. Plant carrier according to claim 9, **characterized in that** the inlet pipe (11) comprises at least one inlet opening (43) in its wall (41), which is arranged at a predetermined height above the floor of an inlet chamber (7).

11. Plant carrier according to claim 10, **characterized in that** the inlet chamber (7) is separated from the irrigation chamber (2) by a partition wall (8) that has at least one flow-through opening (10).

12. Plant carrier according to claim 11, **characterized in that** the flow-through opening (10) is adjacent to the bottom (9) of the irrigation chamber (2).

13. Plant carrier according to any one of claims 1 through 12, **characterized in that** the inlet (5) and the outlet (6) are arranged on the same edge of the irrigation chamber (2).

## Revendications

1. Support de plantes (1) avec un compartiment d'irrigation (2), une alimentation (5) et une évacuation (6), qui comporte un système de trajectoire d'évacuation (15), sachant que le système de trajectoire d'évacuation (15) comporte une première trajectoire d'évacuation (19) avec un premier sens d'écoulement et une deuxième trajectoire d'évacuation (20), sachant que la deuxième trajectoire d'évacuation (20) comporte au moins une embouchure (21) dans la première trajectoire d'écoulement (19),
**caractérisé en ce que** la deuxième trajectoire d'évacuation (20) comporte dans la zone de l'embouchure (21) un deuxième sens d'écoulement avec une composante de direction qui est en direction opposée au premier sens découlement dans la zone de l'embouchure (21) et **en ce que** l'évacuation comporte une ouverture d'évacuation (28), qui se trouve en liaison avec le système de trajectoire d'évacuation (15) par un dispositif de tête déflectrice (29), sachant que le dispositif de tête déflectrice (29) comporte une tête déflectrice (30) orientée vers le haut dans le sens de gravité, dont la surface (31) passe dans une paroi d'un premier conduit (32) et le système de trajectoire d'évacuation (15) est en liaison par au moins une ouverture (34) du dispositif de tête déflectrice (29) avec un deuxième conduit (33) et le premier conduit (32) et le deuxième conduit (33) débouchent dans l'ouverture d'évacuation (28) ou passent à travers celle-ci.

2. Support de plantes selon la revendication 1, **caractérisé en ce que** la deuxième trajectoire d'évacuation (20) comporte au moins cinq embouchures (21) dans la première trajectoire d'écoulement (19).

3. Support de plantes selon l'une quelconque des revendications 1 ou 2, **caractérisé en ce que** la première trajectoire d'évacuation (19) comporte au moins une première section (24) et une deuxième section (25), qui sont montées en série, sachant que la première section (24) et la deuxième section (25) sont disposées l'une à côté de l'autre.

4. Support de plantes selon la revendication 3, **caractérisé en ce que** la première trajectoire d'évacuation (19) comporte un nombre impair de sections (24-26), qui sont montées en série et disposées les unes à côté des autres.

5. Support de plantes selon l'une quelconque des revendications 1 à 4, **caractérisé en ce que** le dispositif de tête déflectrice (29) est orienté le long du sens de la gravité avec l'ouverture d'évacuation (28).

6. Support de plantes selon l'une quelconque des revendications 1 à 5, **caractérisé en ce que** le dispositif de tête déflectrice (29) est en liaison avec un conduit (36) orienté vers le haut dans le sens de la gravité.

7. Support de plantes selon la revendication 1, **caractérisé en ce qu'**une troisième trajectoire d'évacuation est prévue, qui est en liaison avec le compartiment d'irrigation (2) par le biais d'un trop-plein (44).

8. Support de plantes selon la revendication 7, **caractérisé en ce que** la première trajectoire d'évacuation (19) et la deuxième trajectoire d'évacuation (20) sont séparées de la troisième trajectoire d'évacuation par une paroi (38), qui est plus haute qu'une hauteur déterminée par le trop-plein (44).

9. Support de plantes selon l'une quelconque des revendications 1 à 8, **caractérisé en ce que** l'alimentation comporte un conduit d'alimentation (11) avec une section d'écoulement (39), qui est interrompue par une plaque déflectrice (40), sachant que le conduit d'alimentation (11) comporte une paroi tubulaire (41) avec au moins une ouverture de sortie (42) dans la zone de la plaque déflectrice (40).

10. Support de plantes selon la revendication 9, **caractérisé en ce que** le conduit d'alimentation (11) comporte au moins une ouverture d'entrée (43) dans sa paroi (41), qui est disposée à une hauteur prédéterminée au-dessus d'un fond d'un compartiment d'alimentation (7).

11. Support de plantes selon la revendication 10, **caractérisé en ce que** le compartiment d'alimentation (7) est séparé du compartiment d'irrigation (2) par une paroi de séparation (8), qui comporte au moins une ouverture d'écoulement (10).

12. Support de plantes selon la revendication 11, **caractérisé en ce que** l'ouverture d'écoulement (10) est adjacente au fond (9) du compartiment d'irrigation (2).

13. Support de plantes selon l'une quelconque des revendications 1 à 12, **caractérisé en ce que** l'alimentation (5) et l'évacuation (6) sont disposées sur le même bord du compartiment d'irrigation (2).
